# EUROPEAN PATENT SPECIFICATION

(11) **EP 1 378 103 B1**
(45) Date of publication and mention of the grant of the patent: **26.10.2016**
(21) Application number: 02718340.9
(22) Date of filing: 11.04.2002
(51) Int. Cl.: H04L 29/06

(54) **HYBRID NETWORK**
HYBRIDES NETZWERK
RESEAU HYBRIDE

(30) Priority: 12.04.2001 GB 0109299
(43) Date of publication of application: 07.01.2004
(73) Proprietor: BRITISH TELECOMMUNICATIONS public limited company, London EC1A 7AJ (GB)
(72) Inventor: BARRETT, Mark, Alan, Needham Market, Suffolk IP6 8JJ (GB); ARMES, David, John, Ipswich, Suffolk IP1 6AG (GB); REGNAULT, John, Christopher, Newbourne, Woodbridge, Suffolk IP12 4PA (GB); SAGER, John, Christopher, Newbourne, Woodbridge IP12 4NZ (GB); MASSICOTT, Jennifer, Frances, Ipswich, Suffolk IP4 1NZ (GB)
(74) Representative: Lidbetter, Timothy Guy Edwin
(86) International application number: PCT/GB2002/001702
(87) International publication number: WO 2002/084917

(56) References cited:
- EP-A- 1 035 702
- WO-A-01/05098
- WO-A-97/35402
- US-A- 6 061 346
- INOUE A ET AL: "IP LAYER SECURITY AND MOBILITY SUPPORT DESIGN POLICY AND AN IMPLEMENTATION" ISS '97. WORLD TELECOMMUNICATIONS CONGRESS. (INTERNATIONAL SWITCHING SYMPOSIUM). GLOBAL NETWORK EVOLUTION: CONVERGENCE OR COLLISION? TORONTO, SEPT. 21 - 26, 1997, ISS. WORLD TELECOMMUNICATIONS CONGRESS. (INTERNATIONAL SWITCHING SYMPOSIUM), TORONTO, P, vol. 1, 21 September 1997 (1997-09-21), pages 571-577, XP000720565

## Description

This invention relates to hybrid fixed-mobile communications networks and in particular to wireless access to local area networks (LANs).

With the advent of the Internet and the World Wide Web the manner in which many people now work is defined by their ability to connect to a network in order to access the data that they need. Clearly, those whose work involves travel experience the greatest dislocation when they are away from their normal office, whether travelling internationally, or just being in a different location of the factory or office building.

The specification will refer to the OSI (Open Systems Interconnect) seven-layer reference model, in particular to the Data Link layer (layer 2), e.g. Ethernet frames, and the Network layer (layer 3) e.g. IP packets. (Layer 1 is the Physical layer, e.g. wire/fibre)

A VLAN (virtual LAN) is a logical LAN in which topologically distributed hosts and network equipment share a single broadcast domain. VLANs are deployed for one or more of a multitude of reasons including broadcast control, security, performance and simplification of network management. However a switched VLAN only provides flexibility and security to the corporate desktop and no further. There is a barrier between fixed and mobile domains, and it is difficult to roam easily between them.

There is currently great interest in Wireless LAN (WLAN) systems which allow mobile users to access LANs. A VLAN is composed of physically separate segments that are considered to be one large network; it provides transparent data link layer connectivity (OSI layer 2) and assumes the usage of a flat IP address space and this makes a VLAN an ideal platform for Wireless LAN deployment. By connecting all WLAN access points to the same VLAN, a mobile terminal with a valid network address can roam seamlessly across the system without interrupting OSI network layer (layer 3) connectivity (and accordingly without interrupting higher layer applications). The decoupling of the logical LAN from the network topology means that wireless access points can be dispersed arbitrarily around the site governed by radio coverage rather than network connectivity requirements.

One standardised variant, known by the IEEE specification number 802.11 b, is becoming widely adopted, especially in the United States of America, and is being deployed in company premises and public spaces such as airports. Vendors of home networking equipment are beginning to provide low-end 802.11b systems so that employees can use their office PCMCIA - Personal Computer Memory Card International Association - cards with domestic wireless networks. WLANs typically use the Industrial, Scientific and Medical (ISM) radio bands around 2.4GHz and commercial systems provide a raw bandwidth total of 11 Mbit/s from each wireless access point.

Current GPRS (General Packet Radio System) services use data link layer tunnels constructed through underlying network layer networks to convey data from the mobile device to a suitable gateway. On roaming, some of this tunnel infrastructure needs to be re-made, at considerable overhead in the network. The GPRS system provides a solution to the roaming problem, but not to the security issues.

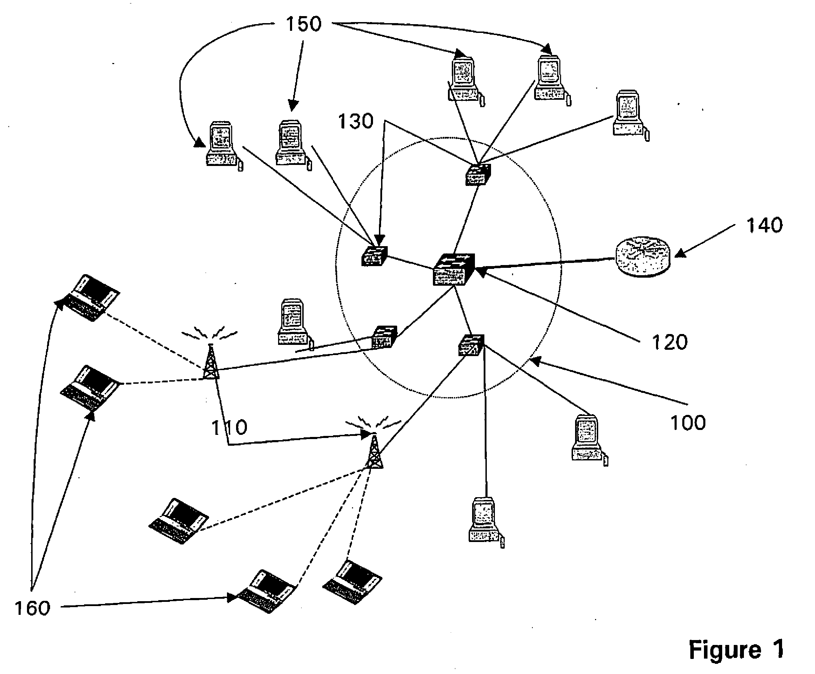

Figure 1 shows a schematic depiction of a known WLAN topology. A local area network (LAN) 100 comprises a number of wireless access points (APs) 110. In the exemplary network shown the LAN is a switched network, comprising edge switches 130 and one or more core switches 120. Fixed terminals 150 and wireless access points 110 are each connected to one of a number of edge switches 130, and the edge switches are all connected to a core switch 120. In order to allow connection to a further network (such as a neighbouring LAN or the Internet) the core switch 120 may be connected to a router 140. Mobile terminals 160 make a radio connection to one of the wireless access points 110 using a suitable communication protocol, for example the protocol defined by IEEE802.11b. Typically the mobile terminals are laptop computers or personal digital assistants (PDAs) which incorporate a suitable modem. The wireless access points 110 receive wireless communications from the mobile terminals 160, translate the data packets so that they can be sent across the fixed network and then send the packets to the associated edge switch 130 so that they can be forwarded to the correct destination.

Each VLAN needs to be terminated at a router interface or sub-interface that defines the address range and subnet gateway for that VLAN. Inter-VLAN communication requires a router in exactly the same way as IP-subnetworking in a routed multi-access network. This potential bottleneck gives rise to the notion of a "well behaved" VLAN, which traditionally for fixed networks is one in which 80 percent of the traffic remains local to that VLAN segment. When used for a WLAN deployment, the primary motivation for the use of a VLAN is the facility of geographically dispersed, flat connectivity. It is very likely that the vast majority of the traffic on it will pass through the gateway and out into the fixed and external networks. The capacity requirements of a wireless VLAN gateway need to be dimensioned accordingly, assuming that the VLAN is not "well behaved".

The transmission of data over wireless transmission links raises security issues as it is possible for a third party to attempt to gain unauthorised access to the network or for wireless signals to be received by a third party. This gives a an unauthorised user ("hacker") the opportunity to "spoof" an authorised mobile terminal (that is, to make an unauthorised terminal appear to be the authorised one), or to attempt to access the contents of the packets transmitted over the wireless transmission link. The 802.11b specification includes the optional use of Wired Equivalent Privacy (WEP), which is an encryption mechanism based on pre-shared cryptographic keys. However, studies by the Internet Security, Applications, Authentication and Cryptography (ISAAC) Group at University of California, have shown that as a consequence of the method used to ensure packet integrity it is possible for encrypted packets to be redirected by a third party. As decryption occurs as soon as the packet passes through the wireless access point into the fixed network this is a serious concern.

There is a need for a network administrator to have the capability to build secure VPNs (Virtual private networks), over any infrastructure or combination of infrastructure types. Traditional Virtual Private Network products encapsulate private IP (Internet Protocol) traffic that traverses a public network between sites on the VPN. The encapsulation is handled by a gateway at each VPN site, which appears to each network as an IP router. Traffic flow within the VPN is determined by the settings in routers at the core of each network. A VPN is extremely flexible in that it can be set-up and taken-down very quickly, over multiple heterogeneous networks.

IPsec (Internet Security Protocol) is a transport layer security protocol layer operating directly on top of the Internet Protocol (IP). It is rapidly becoming the standard for encapsulating traffic between sites on an IP VPN. There are actually two distinct protocols; Authenticating Header (AH) and Encapsulating Security Payload (ESP). Both provide endpoint and data authentication capabilities, but ESP also provides data confidentiality. Both protocols operate by negotiating a Security Association (SA) between each pair of communicating endpoints (one SA for each direction of communication), which establishes a common security context (algorithms, keys and state) to allow information to be exchanged securely.

Inoue et al ("IP Layer Security and Mobility Support Design Policy and An implementation"), ISS '97, XVI World Telecom Congress Proceedings, Toronto, Sept 1997), discusses some of the security issues surrounding mobile computing over the Internet, by providing multiple satges of security gateways. However, there are particular issues in integrating fixed and Mobile terminals in the same network.

According to a first aspect of the invention there is provided a method of handling data traffic between terminals of a common physical network infrastructure, a gateway being provided for access between virtual networks.
characterised in that the terminals are allocated to a plurality of different security classes, low-security terminals and higher-security terminals being connected to respective first and second virtual networks carried on the same physical network,
encrypting traffic from terminals associated with the first virtual network when carried to terminals associated with the second virtual network,
the gateway operating a firewall system allowing traffic from the first virtual network access to the second virtual network only when so encrypted, and
routing calls originating in the first virtual network addressed to destinations other than those in the second virtual network otherwise than through the second virtual network.

According to a second aspect there is provided a communications network comprising;
connection means for a plurality of constituent virtual networks sharing a physical infrastructure each constituent virtual network being connectable to one or more terminals carrying network traffic having a respective security class;
and a gateway connecting the constituent virtual networks to each other characterised in that the connection means are arranged such that the terminals are allocated to a plurality of security classes and are each allocated to one of the virtual networks according to their respective security classes,
and having means for identifying network traffic passing from the first virtual network to a second virtual network associated with a higher security class,
encryption means for encrypting traffic originating on the first virtual network when that traffic is addressed to an address on the second virtual network,
access means for allowing only such network traffic from the first virtual network that is so encrypted to be carried over the second virtual network supporting the high-security users.
and routing means for segregating calls originating in the first virtual network to destinations in the second virtual network from calls originating in the first virtual network to destinations other than in the first virtual network by routing the latter by a route other than through the second virtual network.

This invention segregates network users having different security levels using the same physical infrastructure. Low-security users and higher-security users are connected to different virtual networks carried on the same physical network, a gateway with firewall capabilities being provided for access between the virtual networks. By encrypting traffic on the virtual network supporting the low-security users, and arranging that the firewall allows only traffic so encrypted to reach the virtual network supporting the high-security users, the integrity of the high security network can be ensured. Also, if some of the users have wireless terminals, the virtual network architecture provides support for mobility of the terminals across different physical access points.

This invention removes the need for proprietary networking technology and allows an existing proprietary VLAN to extend to places where fixed terminals have not been provided. It is preferred that network traffic having a lower security class is encrypted using the Internet Security Protocol and also that the security gateway includes a firewall system, so that the higher security possible with the fixed network is not compromised by the presence of mobile terminals.

An embodiment of the invention will now be described, by way of example only, with reference to the following figures in which
Figure 1 shows a schematic view of a known hybrid fixed-mobile communications network, as has already been discussed; and
Figure 2 shows a schematic view of a hybrid fixed-mobile communications network according to the present invention.

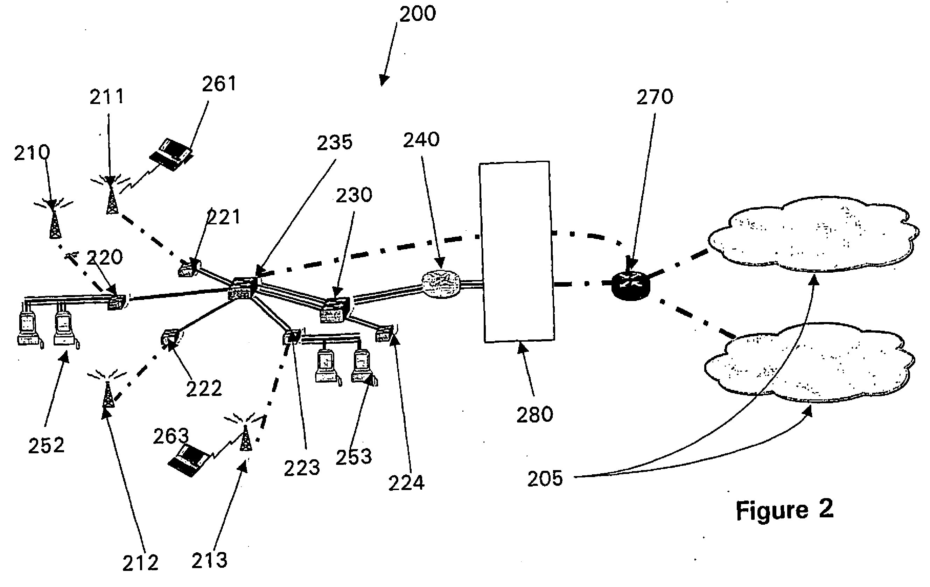

Figure 2 shows a schematic depiction of a network according to the present invention. A local area network (LAN) 200 comprises a number of wireless access points (APs) 210, 211, 212, 213. In the exemplary network shown the LAN is a switched network, comprising edge switches 220, 221, 222, 223, 224, that connect end devices 252, 253, 261, 263 and tag the traffic to the appropriate VLAN, and core switches 230, 235 making the layer 2 backbone. Fixed terminals 252, 253 and wireless access points 210, 211, 212, 213 are each connected to one of the edge switches 220, 221, 222, 223, 224, and each edge switch 220, 221, 222, 223, 224 is connected to one of the core switches 230 or 235. The core switches 230, 235 are also interconnected.

The solid lines denote the common physical connections between the edge switches 220, 221, 222, 223, 224, and the core switches 230, 235. These connections act as 802.1 q trunks and therefore carry the tagged traffic from all the VLANs. As such, the VLAN designation is done per physical end user port 252, 253, 261, 262, so that a switch 223 may provide network access to both insecure devices 263 and secure devices 253 whilst providing isolation at layer 2. In order to allow connection to other networks (such as a neighbouring LAN or the Internet) one of the core switches 230 is connected to an internal router 240.

Mobile terminals 261, 263 make a radio connection to the wireless access points 210, 211, 212, 213 using a suitable communication protocol, for example the protocol defined by 802.11b. Connectivity between VLANs requires moving up to layer 3 and using routing.One of the core switches 235 is connected to an external router 270, which is in turn connected to the external side of a firewall 280. This provides routing between the insecure VLAN devices, 261, 263 and a path to the outside of the firewall (chain dotted lines). The Internal router 240 is connected to the internal side of firewall 280, and provides IP connectivity between the secure VLAN devices 252, 253 and a path to the inside of the firewall 280 (triple line). The firewall 280 divides the LAN 200 (which is, for example an intranet) from an external network 205, which may be for example the Internet.

The network layer router connectivity defines the security status of the VLANs that make up the LAN. Consequently, it is possible to define the LAN as being secure and the external network as being insecure. The LAN is a hybrid network that includes both fixed LANs and wireless LANs. The LAN is arranged such that the WLANs comprises a number of VLANs, each served by one of the core switches 230, 235. Wherever they may be, each of the mobile terminals 261, 263 is connected to the network through one of the base stations 210, which are all connected to a single VLAN 235 (or, if the number of mobile terminals is such that it is not possible to connect all of them to a single wireless-dedicated VLAN, the mobile terminals are each connected to one of a number of such wireless-dedicated VLANs). Similarly all of the fixed terminals are connected to a different VLAN 230 (of which there will typically be more than one) so that mobile terminals and fixed terminals are segregated. The fixed VLAN 230 is connected to the inside of the firewall 280 and constitutes the secure LAN whereas the wireless VLAN 235 is connected to the external side of the firewall 280 and so is regarded as insecure.

By definition, the fixed terminals 252, 253 can be "trusted" as they are connected to the fixed network and thus the security policies that are associated with the fixed VLAN(s) 230 allow the fixed terminals to access servers and network services available within the LAN and also for access to the external networks 205 via the firewall. The firewall 280 prevents unauthorised access from the external network to terminals and servers which are connected to the LAN.

Equally, it is possible to define the access to the wireless VLAN 235 as being insecure. In the present embodiment, the WEP protocol has been dispensed with in order to provide security for, at a minimum, the wireless communications link. A secure wireless link is provided by establishing an IPSec (Internet Security Protocol) "tunnel" from the mobile terminal to the external side of the firewall, via the external router 270. The use of IPSec in preference to WEP moves the security burden from the wireless access points 210 to the firewall 280All packets from mobile terminals are switched from the associated wireless VLAN 235 to the external router. If a mobile terminal 261 attempts to connect to a fixed server which is connected to the LAN (i.e. a server which is on the internal side of the firewall 280) then the mobile terminal 261 must have permission to pass data through the firewall 280 from the external side of the firewall. This can be achieved by a suitable identification and authentication process. Such authentication may be a logon identity and a password in combination with a digital certificate or cryptographic key. Clearly in this case the firewall 280 will be provided with access to a suitable certification authority or PKI (Public Key Infrastructure) server to enable the authentication method.

When a mobile terminal 261, 263 has successfully passed data packets through the firewall 280 the packets can be routed to the fixed-terminal VLAN 230 associated with the destination server and then switched across that VLAN to that server. As the network 230 on the internal side of the firewall 280 is assumed to be secure there is no need to use IPSec once the packets have passed inside the firewall. If a mobile terminal 265 attempts to connect to a server which is connected to an external network 205, or to another mobile device connected to the VLAN 235, the connection will be made using normal IP routing paths. A decision as to whether to transmit unencrypted data packets, to establish either IPSec tunnel mode or IPSec transport mode security (or an alternative security mechanism) will depend upon the user and any local policies for the mobile terminal 261, 263. In cases where data does not pass through the firewall 280 (from the external side to the internal side) it would be possible for IPSec tunnels to be formed to and from the external router 270 to remove the security overhead from the firewall.

In a further alternative, if it is desired that the mobile terminals 261, 263 may only access the secure internal network(s) 200 , and not have access to any public, external networks 205, then the wireless VLAN 235 should be connected directly to the firewall 280. The external router 270, if provided, is then only accessible by terminals connected to the fixed LAN, through router 240.

It should also be realised that the firewall 280 could be replaced by a dedicated VPN termination unit, a router or other device which is capable of providing IPSec tunnel-mode capability. However, if a firewall 280 is used it will be "Internet Hardened" such that it will be robust to attacks from third parties and provide positive logging of all events, making a firewall the best 'single box' solution. Without the firewall, a VPN gateway should be defended by a firewall on the interface to the external network and may also require an addition firewall or monitoring device on the internal side of the gateway to track network usage and traffic flows.

Additionally it is possible to provide 'insecure' fixed network access points 252, 253 to a network according to the present invention. These access points would be segregated onto a separate VLAN and would allow personnel who do not have full access rights (such as visitors to the building where the fixed point 252 is housed, to access public domain networks 205 or to establish a secure connection (using, for example, an IPSec tunnel) back to their own private or corporate network.

When a terminal connects to the network either on a fixed port or via a wireless access point 210, 211, 212, 213 it requires a valid network address in order to communicate with other devices. In the case of a standard network using the current internetworking standards (that is an IPv4 network) an IP address is either configured manually or provided automatically using DHCP Dynamic Host Control Protocol - Next-generation IPv6 networks are planned to have scoped address ranges, as opposed to private, and also include address auto-configuration capabilities. For a wireless VLAN, the use of DHCP has obvious advantages as the sorts of host devices used on it are likely also to be used away from the intranet e.g. a lap top used at work, home or abroad, and thus automatic configuration of the network address is preferable. Similarly, ports 250 on the intranet designated for open access to public domain networks for visiting individuals need automatic address allocation.

The firewall 280 (or VPN gateway) is both a single point of failure and also a potential bandwidth bottleneck and thus it is advantageous to be able to scale the network design by including gateway redundancy. For a Wireless LAN , scalability is limited by data link layer broadcast coverage. Scaling the system above a few hundred users requires the addition of further VLANs which brings with it the original problems to do with roaming across subnets with dissimilar network address space. One solution to this is presented by the potential inclusion of 802.1q VLAN trunking capabilities in WLAN access points. For a big site, several VLANs can be presented at each access point so limiting the number of users per VLAN. This is the first limitation that the current design places on access points over and above basic unsecured 802.11b conformity. It is envisaged that in big sites it could be quite appropriate to only provision certain shared areas, e.g. the site conference suite, with . this facility. This would limit user groups to designated shared areas and their own office space.

With any network it is important to optimise traffic paths. This is especially so for networks according to the present invention as the use of IPSec places a significant burden on both client terminals and the firewall. With the network configuration shown, only traffic that is destined for the internal LAN 230 is secured using IPSec, whilst traffic destined for an external network 205 remains outside of the secure, internal environment.

The network design has major advantages in that the WLAN environment can be deployed on the existing internal network infrastructure (switches, routers, etc). This reduces the cost of ownership in terms of the required hardware whilst also reducing the management and operational support costs. Connectivity to the WLAN is also only bounded by the scope of the layer 2 switched network. The most fundamental feature of the network is that the common infrastructure must only function up to the data link layer (layer 2). Layer 2 devices provide greater throughput than traditional network layer devices and allow geographically dispersed workgroups to appear as one single domain to the higher ISO layers. With this network design the core of the network effectively operates at the data link layer (layer 2), with network layer (layer 3) and above devices located at the edges to provide inter-connects between the data link layer environments. Routers are required to provide connectivity between different VLAN's. This can be done either by connecting a dedicated router port (e.g. ethernet, fast ethernet, etc) to a switch port configured for the relevant VLAN and configure the higher layer protocols as required. This provides no special dependencies on the router but as each VLAN requires its own port this method does not scale well if a large number of VLAN's are required. Alternatively a dedicated router port that supports the IEEE802.1q specification can be connected to a switch port and configured as a trunk. With this configuration a virtual interface can be created for each VLAN, which reduces hardware costs. This method does require that the router also supports IEEE802.1q.

## Claims

1. A communications network comprising;
connection means for a plurality of constituent virtual networks (230, 235) sharing a physical infrastructure, each constituent virtual network (230, 235) being connectable to one or more terminals (252, 253...; 261 263) carrying network traffic;
and a gateway (280) connecting the constituent virtual networks to each other; **characterised in that** the connection means are arranged such that the terminals are allocated to a plurality of security classes and are each allocated to one of the virtual networks according to their respective security classes,
and having means for identifying network traffic passing from the first virtual network (235) to a second virtual network (230) associated with a higher security class,
encryption means for encrypting traffic originating on the first virtual network when that traffic is addressed to an address on the second virtual network,
access means for allowing only such network traffic from the first virtual network that is so encrypted to be carried over the second virtual network supporting the high-security users,
and routing means for segregating calls originating in the first virtual network (235) to destinations in the second virtual network (230) from calls originating in the first virtual network (235) to destinations other than in the first virtual network by routing the latter by a route other than through the second virtual network.

2. A communications network according to claim 1, wherein the first virtual network (230) is a wireless network

3. A communications network according to claim 1 in which network traffic having the lower security class is encrypted using the Internet Security Protocol.

4. A communications network according to any preceding claim in which the gateway (280) includes a firewall system.

5. A method of handling data traffic between terminals of a common physical network infrastructure, a gateway (280) being provided for access between virtual networks (230, 235),
**characterised in that** the terminals are allocated to a plurality of different security classes, low-security terminals and higher-security terminals being connected to respective first and second virtual networks (230, 235) carried on the same physical network,
encrypting traffic from terminals associated with the first virtual network when carried to terminals associated with the second virtual network,
the gateway operating a firewall system allowing traffic from the first virtual network access to the second virtual network only when so encrypted, and
routing calls originating in the first virtual network (235) addressed to destinations other than those in the second virtual network (230) otherwise than through the second virtual network.

6. A method according to claim 5, wherein the lower security terminals (261, 263) are wireless terminals.

## Patentansprüche

1. Kommunikations-Netzwerk, das umfasst:
eine Verbindungseinrichtung für eine Vielzahl von einzelnen virtu.ellen Netzwerken (230, 235), die eine physikalische Infrastruktur gemeinsam benutzen, wobei jedes einzelne virtuelle Netzwerk (230, 235) mit einem Datenendgerät oder mehreren Datenendgeräten (252, 253; 261, 263) verbindbar ist, die Netzwerk-Datenverkehr durchführen,
und
ein Gateway (280), das die einzelnen virtuellen Netzwerke miteinander verbindet,
**dadurch gekennzeichnet, dass** die Verbindungseinrichtung so ausgebildet ist, dass die Datenendgeräte einer Vielzahl von Sicherheitsklassen zugeordnet sind und jeweils gemäß ihren entsprechenden Sicherheitsklassen einem der virtuellen Netzwerke zugeordnet sind,
und aufweist:
eine Einrichtung zum Identifizieren von Netzwerk-Datenverkehr, der von dem ersten virtuellen Netzwerk (235) zu einem zweiten virtuellen Netzwerk (230) läuft, das einer höheren Sicherheitsklasse zugeordnet ist,
eine Verschlüsselungseinrichtung zum Verschlüsseln von Datenverkehr, der von dem ersten virtuellen Netzwerk herrührt, wenn dieser Datenverkehr an eine Adresse in dem zweiten virtuellen Netzwerk gerichtet ist,
eine Zugangseinrichtung zum Zulassen lediglich eines solchen Netzwerk-Datenverkehrs von dem ersten virtuellen Netzwerk, der so verschlüsselt ist, dass er über das zweite virtuelle Netzwerk, das die User mit hoher Sicherheit unterstützt, transportiert werden kann,
und
eine Routing-Einrichtung zum Trennen von Verbindungen, die von dem ersten virtuellen Netzwerk (235) herrühren und an Zieladressen in dem zweiten virtuellen Netzwerk (230) gerichtet sind, von Verbindungen, die von dem ersten virtuellen Netzwerk (235) herrühren und an nicht in dem zweiten virtuellen Netzwerk liegende Zieladressen gerichtet sind, durch Routing der letzteren über eine Route, die nicht durch das zweite virtuelle Netzwerk führt.

2. Kommunikations-Netzwerk nach Anspruch 1, bei dem das erste virtuelle Netzwerk (230) ein drahtloses Netzwerk ist.

3. Kommunikations-Netzwerk nach Anspruch 1, bei dem Netzwerk-Datenverkehr mit der niedrigeren Sicherheitsklasse unter Verwendung des Internet-Sicherheitsprotokolls verschlüsselt wird.

4. Kommunikations-Netzwerk nach einem vorhergehenden Anspruch, bei dem das Gateway (280) ein Firewall-System beinhaltet.

5. Verfahren zur Abwicklung von Datenverkehr zwischen Datenendgeräten einer gemeinsamen physikalischen Netzwerk-Infrastruktur, wobei ein Gateway (280) zum Zugang zwischen virtuellen Netzwerken (230, 235) vorgesehen ist,
**gekennzeichnet durch**
Zuordnen der Datenendgeräte zu einer Vielzahl von unterschiedlichen Sicherheitsklassen, wobei Datenendgeräte mit niedriger,Sicherheit und Datenendgeräte mit höherer Sicherheit mit einem ersten beziehungsweise einem zweiten virtuellen Netzwerk (230, 235) verbunden sind, wobei der Transport über das gleiche physikalische Netzwerk erfolgt,
Verschlüsseln von Datenverkehr von Datenendgeräten, die
dem ersten virtuellen Netzwerk zugeordnet sind, wenn er an Datenendgeräte durchgeführt wird, die dem zweiten virtuellen Netzwerk zugeordnet sind,
Betreiben des Gateways mit einem Firewall-System, das einen Zugang von Datenverkehr von dem ersten virtuellen Netzwerk zu dem zweiten virtuellen Netzwerk nur zulässt, wenn er so verschlüsselt ist,
und
Routing von Verbindungen, die von dem ersten virtuellen Netzwerk (235) herrühren und an nicht in dem zweiten virtuellen Netzwerk (230) liegende Zieladressen gerichtet sind, über eine andere Route, die nicht **durch** das zweite virtuelle Netzwerk führt.

6. Verfahren nach Anspruch 5, bei dem die Datenendgeräte mit niedrigerer Sicherheit (261, 263) drahtlose Datenendgeräte sind.

## Revendications

1. Réseau de communication comprenant :
un moyen de connexion pour une pluralité de réseaux virtuels constituants (230, 235) partageant une infrastructure physique, chaque réseau virtuel constituant (230, 235) pouvant être connecté à un ou plusieurs terminaux (252, 253, ... ; 261, 263) transportant du trafic de réseau ; et
une passerelle (280) connectant mutuellement les réseaux virtuels constituants ;
**caractérisé en ce que** le moyen de connexion est agencé de sorte que les terminaux sont affectés à une pluralité de classes de sécurité et sont chacun affectés à l'un des réseaux virtuels selon leurs classes de sécurité respectives ; et
présentant un moyen pour identifier du trafic de réseau transitant du premier réseau virtuel (235) vers un second réseau virtuel (230) associé à une classe de sécurité supérieure ;
un moyen de chiffrement pour chiffrer du trafic provenant du premier réseau virtuel lorsque ce trafic est adressé à une adresse sur le second réseau virtuel ;
un moyen d'accès pour n'autoriser qu'un tel trafic de réseau en provenance du premier réseau virtuel, lequel est ainsi chiffré, à transiter sur le second réseau virtuel prenant en charge les utilisateurs hautement sécurisés ; et
un moyen d'acheminement pour séparer les appels en provenance du premier réseau virtuel (235) vers des destinations dans le second réseau virtuel (230) des appels en provenance du premier réseau virtuel (235) vers des destinations distinctes du second réseau virtuel, en acheminant ces derniers par le biais d'un autre chemin que celui menant au second réseau virtuel.

2. Réseau de communication selon la revendication 1, dans lequel le premier réseau virtuel (230) est un réseau sans fil.

3. Réseau de communication selon la revendication 1, dans lequel du trafic de réseau présentant la classe de sécurité inférieure est chiffré en utilisant le protocole de sécurité Internet.

4. Réseau de communication selon l'une quelconque des revendications précédentes, dans lequel la passerelle (280) inclut un système de pare-feu.

5. Procédé de traitement de trafic de données entre des terminaux d'une infrastructure de réseau physique commune, dans lequel une passerelle (280) est fournie à des fins d'accès entre des réseaux virtuels (230, 235) ;
**caractérisé en ce que** les terminaux sont affectés à une pluralité de classes de sécurité distinctes, les terminaux faiblement sécurisés et les terminaux de sécurité supérieure étant connectés à des premier et second réseaux virtuels respectifs (230, 235) transportés sur le même réseau physique ; et **caractérisé par**
le chiffrement du trafic provenant de terminaux associés au premier réseau virtuel lorsqu'il est transporté vers des terminaux associés au second réseau virtuel ;
la passerelle exploitant un système de pare-feu autorisant du trafic en provenance du premier réseau virtuel à accéder au second réseau virtuel uniquement lorsque celui-ci est chiffré ; et
l'acheminent d'appels provenant du premier réseau virtuel (235), adressés à des destinations distinctes de destinations au sein du second réseau virtuel (230), autrement que par l'intermédiaire du second réseau virtuel.

6. Procédé selon la revendication 5, dans lequel les terminaux de sécurité inférieure (261, 263) sont des terminaux sans fil.
